# EUROPÄISCHE PATENTANMELDUNG

(11) **EP 2 930 886 A1**
(43) Veröffentlichungstag der Anmeldung: **14.10.2015**
(21) Anmeldenummer: 15158327.5
(22) Anmeldetag: 10.03.2015
(51) Int. Cl.: H04L 12/28, G10L 15/26

(54) **VERFAHREN UND SYSTEM ZUM BEDIENEN VON HAUSHALTSGERÄTEN MITTELS SPRACHSTEUERUNG**

(30) Priorität: 09.04.2014 DE 102014105037
(71) Anmelder: Miele & Cie. KG, 33332 Gütersloh (DE)
(72) Erfinder: Enslin, Andreas, 33334 Gütersloh (DE)

(57) **Zusammenfassung**

Die Erfindung ist ein Verfahren und ein System zum Bedienen von Haushaltsgeräten (12-18) mittels Sprachsteuerung, wobei ein zur Sprachsteuerung eines Haushaltsgeräts (12-18) bestimmter Sprachbefehl (30) an einen für mehrere Haushalte (10) erreichbaren Server (28) übermittelt wird, wobei der Server (28) einen Spracherkenner (36) und einen Auswerter (38) und einen Verwalter (40) umfasst, wobei mittels des Verwalters (40) der eingehende Sprachbefehl (30) automatisch einem Benutzerkonto und einem in dem Benutzerkonto spezifizierten Haushalt (10) zugeordnet wird, wobei mittels des Spracherkenners (36) der beim Server (28) eingehende Sprachbefehl (30) automatisch in eine elektronisch codierte Anweisung (44) und die elektronisch codierte Anweisung (44) mittels des Auswerters (38) automatisch in einen Steuerbefehl (46) für entsprechend dem Benutzerkonto in dem jeweiligen Haushalt (10) vorhandene Haushaltsgeräte (12-18) umgesetzt wird und wobei der Steuerbefehl (46) mittels des Servers (28) an den in dem Benutzerkonto spezifizierten Haushalt (10) gesandt wird.

## Beschreibung

Die Erfindung betrifft ein Verfahren sowie ein System zum Bedienen von Haushaltsgeräten mittels Sprachsteuerung.

Die Verwendung von Sprache zum Bedienen von Haushaltsgeräten ist bekannt. Zum Stand der Technik kann beispielhaft auf die DE 43 21 304 A, die DE 197 23 938 A und die DE 10 2005 018 276 A verwiesen werden.

Aus der DE 43 21 304 A sind ein Verfahren und eine Vorrichtung zum Steuern und Überwachen von üblicherweise in einem Haushalt vorhandenen Audio- oder Videogeräten bekannt. Alle Geräte sind an ein als Masterbox bezeichnetes Gerät angeschlossen, welches mittels mehrerer Funkfernbedienungen bedienbar ist, so dass eine mittelbare Bedienung der angeschlossenen Geräte möglich ist. Die Masterbox kann dabei Audio- oder Videodaten von einem als Signalquelle fungierenden Gerät in einem ersten Raum an andere, als Ausgabegerät fungierende Geräte in einem anderen Raum um- oder weiterleiten. Die Masterbox umfasst auch einen Sprachspeicher, in dem aufgezeichnete Sprachsegmente abgelegt und als Quittierung eines an die Masterbox gegebenen Befehls über einen Lautsprecher ausgegeben werden. Zusätzlich kann der Sprachspeicher auch als Notizblock verwendet werden, indem später wiedergebbare Sprachsegmente aufgezeichnet werden.

Die DE 197 23 938 A beschreibt ein durch Sprachsignale steuerbares Haushaltsgerät, dessen Bedienung durch Sprachsignale dadurch eine erhöhte Sicherheit erfahren soll, dass aufeinanderfolgende Sprachsignale nur dann zur Bildung eines Steuerbefehls führen, wenn die aufeinanderfolgenden Sprachsignale in einer definierten Reihenfolge und innerhalb einer vorgegebenen Zeitspanne eingegeben werden.

Aus der DE 10 2005 018 276 A ist ein Verfahren zum Betrieb von mittels eines Computers vernetzten Elektrogeräten in einem Haushalt mittels Spracherkennung bekannt. Die Spracheingabedaten werden im Bereich des jeweiligen Haushaltsgeräts aufgenommen, von dort an den Computer gegeben, von diesem ausgewertet und in Steuerbefehle für die Haushaltselektrogeräte umgesetzt. Der im Rahmen des Verfahrens verwendete Computer ist ein in Bezug auf den jeweiligen Haushalt lokaler Computer, mittels dessen die Haushaltsgeräte vernetzt und steuerbar sind.

Der Erfindung liegt ausgehend von diesem Stand der Technik das Problem zugrunde, dass Haushaltsgeräte zwar mehr und mehr untereinander vernetzt sind, dass dazu aber verschiedene Technologien erforderlich sind, die teilweise untereinander nicht kompatibel sind. Informationen müssen daher aufwändig über speziell dafür ausgelegte Gateways, Router und andere als Home-Server und dergleichen fungierende Einrichtungen in die jeweils erforderlichen technischen Formate umgesetzt werden. Für den Anwender ist es deshalb bislang nur mithilfe von spezialisierter Software oder überhaupt nicht möglich, die Interaktion von vernetzten Geräten auf einfache Art und Weise zu beeinflussen. Bislang werden dazu aufwändig erstellte und komplexe grafische Bedienoberflächen benötigt, die aufgrund der erforderlichen Anzahl von Einstellmöglichkeiten nur schwer zu bedienen und zu erlernen sind. Die dadurch begrenzte Akzeptanz solcher Systeme hat deren Bedeutung am Markt bisher stark limitiert. Speziell eine "Einzelplatzlösung", wie sie in der DE 10 2005 018 276 A beschrieben ist, verursacht hohe Anschaffungs- und Wartungskosten und ist wenig flexibel, da nur vorprogrammierte Sprachbefehle, die jeweils immer genau eine bestimmte Aktion auslösen, verwendet werden können.

Der im Folgenden beschriebene Ansatz soll einen Beitrag zur Lösung dieses Problems leisten.

Erfindungsgemäß ist dafür ein Verfahren zum Bedienen von Haushaltsgeräten eines Haushalts mittels Sprachsteuerung mit den Merkmalen des Anspruchs 1 vorgesehen. Bei dem Verfahren wird ein zur Sprachsteuerung eines Haushaltsgeräts bestimmter Sprachbefehl an einen für mehrere Haushalte erreichbaren Server übermittelt. Das Verfahren zeichnet sich dadurch aus, dass der Server insbesondere in Form einer entsprechenden Software-Funktionalität einen Spracherkenner, einen Auswerter und einen Verwalter umfasst, dass mittels des Verwalters der eingehende Sprachbefehl automatisch einem Benutzerkonto und einem in dem Benutzerkonto spezifizierten Haushalt zugeordnet wird und dass mittels des Spracherkenners der beim Server eingehende Sprachbefehl automatisch in eine elektronisch codierte Anweisung und die elektronisch codierte Anweisung mittels des Auswerters automatisch in einen Steuerbefehl für ein entsprechend dem Benutzerkonto in dem jeweiligen Haushalt vorhandenes Haushaltsgerät umgesetzt wird. Der so auf Basis des Sprachbefehls automatisch generierte Steuerbefehl wird abschließend mittels des Servers automatisch an den in dem Benutzerkonto spezifizierten Haushalt gesandt und löst dort die mit dem Sprachbefehl spezifizierte Funktion aus, bewirkt also zum Beispiel, dass ein Haushaltsgerät ausgeschaltet wird.

Der Vorteil der Erfindung besteht darin, dass einer Vielzahl von Haushalten eine Möglichkeit zur komfortablen Sprachsteuerung der in dem jeweiligen Haushalt vorhandenen Haushaltsgeräte oder zumindest den zur Verwendung im Rahmen des Verfahrens verfügbar gemachten Haushaltsgeräten angeboten wird, wobei als komfortable Sprachsteuerung eine Sprachsteuerung verstanden wird, bei der natürliche Sprache verarbeitet wird, ohne dass der Benutzer bestimmte Schlüsselwörter oder dergleichen lernen und verwenden muss. Die dafür notwendige automatische Analyse eines Sprachbefehls ist aufwändig und wird daher mittels eines zentralen Servers durchgeführt, der die dafür notwendige Rechenleistung und Speicherkapazität aufweist. Die Weiterleitung auf Basis jeweils eines Sprachbefehls generierter Steuerbefehle an einen Haushalt erfolgt ausgehend von dem Server zum Beispiel über das Internet.

Das oben skizzierte Problem wird ebenfalls mittels eines Systems zum Bedienen von Haushaltsgeräten mittels Sprachsteuerung gelöst, welches zumindest einen derartigen Server sowie auf Seiten jedes Haushalts, für den die Sprachsteuerung genutzt werden soll, eine lokale Einheit aufweist, die dafür bestimmt und eingerichtet ist, von dem Server ausgesandte Steuerbefehle an genau ein in dem Steuerbefehl spezifiziertes Haushaltsgerät des jeweiligen Haushalts weiterzuleiten.

Vorteilhafte Ausgestaltungen und Weiterbildungen der Erfindung ergeben sich aus den nachfolgenden Unteransprüchen. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens wird der zur Sprachsteuerung eines Haushaltsgeräts bestimmte Sprachbefehl mittels eines Mobilfunkgeräts, Smartphones, Tabletcomputers an den Server übermittelt. Zur Sprachsteuerung bzw. zur Bereitstellung von Eingaben können auch sogenannte Wearables, also am Körper, insbesondere als Armband zu tragende Geräte verwendet werden, die mit einem Mobilfunkgerät bzw. Smartphone in Kommunikationsverbindung stehen oder sogenannte AV-Brillen, wie beispielsweise Google-Glass. Solche Geräte erfahren eine zunehmende weitere Verbreitung und Personen, die zur Verwendung des hier beschriebenen Ansatzes in Betracht kommen, sind gewohnt, solche Geräte mit sich zu führen. Die Geräte umfassen in an sich bekannter Art Mittel zur Spracherfassung, so dass gesprochene Sprache erfasst und als Sprachbefehl an den Server übermittelt werden kann.

Bei einer Ausführungsform des Verfahrens sendet der Server den auf Basis des jeweiligen Sprachbefehls automatisch generierten Steuerbefehl mittels des Internets an den in dem Benutzerkonto spezifizierten Haushalt. Zugang zum Internet ist heute weit verbreitet. Entsprechend besteht für einen Haushalt normalerweise ohne Weiteres die Möglichkeit, mittels eines entsprechenden Geräts, zum Beispiel einem im Folgenden als lokale Einheit bezeichneten Heim- oder Personal-Computer, Zugriff zum Internet zu erhalten. Eine solche lokale Einheit ist damit ihrerseits im Internet erreichbar, nämlich für den die Steuerbefehle auf Basis jeweils eines Sprachbefehls erzeugenden Server. Mittels der lokalen Einheit und des Internets erhält der Server einen mittelbaren Zugriff auf die in dem jeweiligen Haushalt vorhandenen oder zur Verwendung im Rahmen des Verfahrens freigegebenen Haushaltsgeräte.

Bei einer weiteren Ausführungsform des Verfahrens hat der Server Zugriff auf eine Datenbasis mit dort angelegten Daten zur Spezifikation einer Vielzahl von Benutzerkonten. Für jeden Verwender des hier vorgeschlagenen Verfahrens zum Bedienen von Haushaltsgeräten mittels Sprachsteuerung besteht ein Benutzerkonto. Die von dem Benutzerkonto umfassten Daten erlauben einerseits die Identifikation des jeweiligen Verwenders, zum Beispiel anhand einer Kennung des zur Übermittlung des Sprachbefehls verwendeten Mobiltelefons. Die von dem Benutzerkonto umfassten Daten beziehen sich andererseits auf die in dem jeweiligen Haushalt vorhandenen oder zur Verwendung im Rahmen des Verfahrens freigegebenen Haushaltsgeräte, so dass der Server auf einen eingehenden Sprachbefehl haushaltsgerätespezifische Steuerbefehle generieren kann, die das jeweilige Haushaltsgerät interpretieren kann. Die Sprachbefehle zweier verschiedener Verwender, die jeweils das Schlüsselwort "Waschmaschine" umfassen, werden auf dieser Basis in unterschiedliche Steuerbefehle umgesetzt, wenn sich in den Haushalten der jeweiligen Verwender Waschmaschinen unterschiedlicher Typen/Hersteller befinden.

Bei einer nochmals weiteren Ausführungsform des Verfahrens wird mittels der auf Seiten des Servers als Verwalter fungierenden Softwarefunktionalität mit dem eingehenden Sprachbefehl automatisch ein Benutzerkonto ausgewählt. Die Auswahl kann anhand des Sprachbefehls selbst erfolgen, zum Beispiel indem der Sprachbefehl ein eindeutiges, zuvor festgelegtes Schlüsselwort umfasst, anhand dessen eine automatische Auswahl eines Benutzerkontos möglich ist. Eine weitere, zusätzliche oder alternative Möglichkeit besteht darin, dass aus dem Sprachbefehl Kennwerte extrahiert werden, die die jeweilige Sprechweise, Sprechmelodie usw. des Verwenders charakterisieren und damit eine automatische Auswahl eines Benutzerkontos ermöglichen. Eine nochmals weitere zusätzliche oder alternative Möglichkeit besteht darin, dass eine Kennung des zum Übermitteln des Sprachbefehls verwendeten Geräts ausgewertet wird und auf deren Basis und einer zuvor festgelegten Vergleichsordnung eine automatische Auswahl eines Benutzerkontos erfolgt.

Bei einer besonderen Ausführungsform des Verfahrens gibt die auf Seiten des Servers als Verwalter fungierende Softwarefunktionalität anhand einer jeweiligen Identifikation eines den Sprachbefehl übermittelnden Benutzers automatisch einen hierarchisch gestaffelten Zugriff auf einzelne Haushaltsgeräte des Haushalts frei. Demnach kann zum Beispiel vorgesehen sein, dass bei einer Authentifizierung, welche lediglich eine Kennung des zum Übermitteln des Sprachbefehls verwendeten Geräts berücksichtigt, nur in einem eingeschränkten Umfang ein Zugriff auf Haushaltsgerätefunktionen möglich ist, zum Beispiel derart, dass nur bereits laufende Geräte ausgeschaltet werden können. Wenn der Verwender zusätzlich anhand einer Analyse von aus dem Sprachbefehl extrahierten Kennwerten eindeutig als berechtigter Verwender erkannt ist, kann ein weiterer oder ein vollständiger Zugriff auf die Haushaltsgerätefunktionen freigegeben werden. Optional kann noch vorgesehen sein, dass besondere Haushaltsgerätefunktionen nur dann zugänglich werden, wenn im Rahmen des Sprachbefehls zum Beispiel ein spezielles, zuvor vereinbartes Schlüsselwort übermittelt wird.

Ein Ausführungsbeispiel der Erfindung ist in den Zeichnungen rein schematisch dargestellt und wird nachfolgend näher beschrieben. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung auch Änderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand führen.

Es zeigen
- Figur 1: eine Hausautomation mit mehrere Haushaltsgeräten sowie einen zentralen Server, an den mittels eines Mobilfunkgeräts Sprachbefehle zum Bedienen von Haushaltsgeräten mittels Sprachsteuerung übermittelt werden, sowie
- Figur 2: und
- Figur 3: Darstellungen des Servers mit weiteren Details.

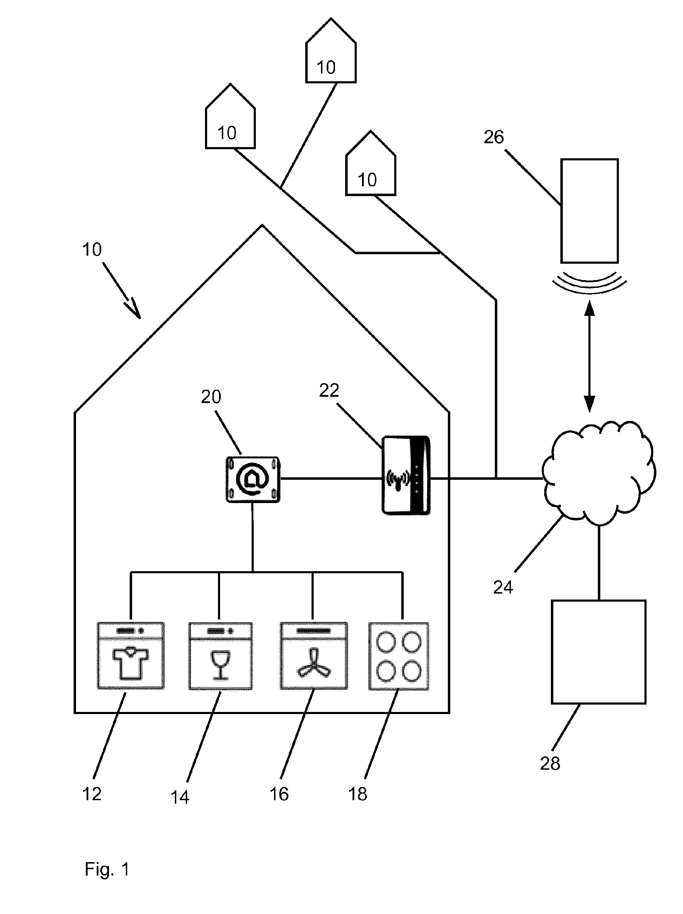

Die Darstellung in Figur 1 zeigt in schematisch stark vereinfachter Form eine Hausautomation. In einem Haushalt 10 befinden sich üblicherweise eine Mehrzahl von Haushaltsgeräten 12, 14, 16, 18, zum Beispiel ein Haushaltsgerät in Form eines Waschautomaten 12, in Form eines Geschirrspülers 14, in Form eines Backofens 16 und in Form eines Kochfelds 18, usw. Über die in Figur 1 exemplarisch gezeigten Haushaltsgeräte 12-18 hinaus kommen im Rahmen des hier vorgestellten Ansatzes selbstverständlich auch andere elektrische Haushaltsgeräte 12-18 sowie sonstige elektrische Einrichtungen und Aggregate im Haushalt 10 in Betracht, zum Beispiel eine Rollladensteuerung, eine Gebäudeheizungsanlage, usw. Im Interesse einer besseren Lesbarkeit wird die nachfolgende Beschreibung - allerdings ohne Verzicht auf eine weitergehende Allgemeingültigkeit - am Beispiel der vorgenannten Haushaltsgeräte 12-18 fortgesetzt.

Die Haushaltsgeräte 12-18 sind zumindest mit einer lokalen Einheit 20, zum Beispiel einem Mikrocomputer in Form eines Heim-/Personal-Computers oder dergleichen, und gegebenenfalls auch untereinander kommunikativ verbunden. Die lokale Einheit 20 selbst ist bei der in Figur 1 gezeigten Situation leitungslos oder leitungsgebunden mit einer Schnittstelleneinheit 22 kommunikativ verbunden. Alternativ kann auch vorgesehen sein, dass die lokale Einheit 20 eine solche Schnittstelleneinheit 22 selbst umfasst. Mittels der Schnittstelleneinheit 22 ist jedenfalls ein mittelbarer Anschluss der Haushaltsgeräte 12-18 an ein externes Netzwerk 24, zum Beispiel das Internet oder ein Mobilfunknetzwerk, möglich. Mittels des im Folgenden mitunter auch nur kurz als Netzwerk 24 bezeichneten externen Netzwerks 24 ist ein mittelbarer Zugriff auf die Haushaltsgeräte 12-18 mittels eines Mobilfunkgeräts 26 oder dergleichen möglich.

Dazu ist ein im externen Netzwerk 24 erreichbarer Server 28 vorgesehen. An den Server 28 sind eine Vielzahl von Haushalten 10 mit jeweils eigenen Haushaltsgeräten 12-18 in der oben beschriebenen Art angeschlossen.

Der Server 28 ist dafür eingerichtet, Sprachbefehle 30 für ein Haushaltsgerät 12-18 zu empfangen, die mittels eines Mobilfunkgeräts/Mobiltelefons 26 oder dergleichen ausgesandt werden. Die nachfolgende Beschreibung wird im Interesse einer besseren Lesbarkeit, aber ohne Verzicht auf eine weitergehende Allgemeingültigkeit, am Beispiel eines Mobilfunkgeräts 26 als Eingabegerät für die jeweiligen Sprachbefehle 30 sowie als Mittel zur Weiterleitung der Sprachbefehle 30 in das externe Netzwerk 24 und von dort an den Server 28 fortgesetzt.

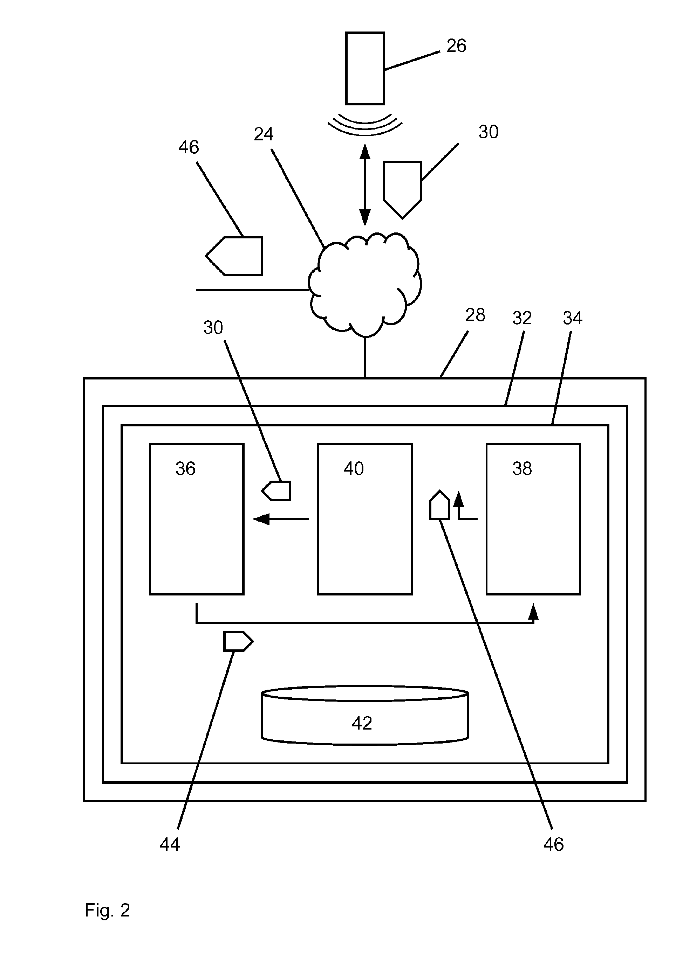

Die Darstellung in Figur 2 zeigt in Form eines Ausschnitts aus der Darstellung gemäß Figur 1 den Server 28 mit weiteren Details. Danach umfasst der Server 28 eine Verarbeitungseinheit in Form von oder nach Art eines Mikroprozessors sowie einen Speicher 32. In den Speicher 32 ist ein Computerprogramm 34 geladen, welches die Funktion des Servers 28 bestimmt.

Das Computerprogramm 34 umfasst eine Spracherkennungsfunktionalität 36, eine semantikbasierte Auswertungsfunktionalität 38 sowie eine Verwaltungsfunktionalität 40. Die Spracherkennungsfunktionalität 36, die semantikbasierte Auswertungsfunktionalität 38 und die Verwaltungsfunktionalität 40 werden im Folgenden kurz als Spracherkenner 36, Auswerter 38 und Verwalter 40 bezeichnet. Der Verwalter 40 fungiert als zentrale Einheit und verwendet den Spracherkenner 36 und den Auswerter 38.

Damit mittels eines Mobilfunkgeräts 26 ein Sprachbefehl 30 an den Server 28 übermittelt werden kann, wählt der Verwender des Mobilfunkgeräts 26 eine ihm zugewiesene Telefonnummer und gelangt damit zu dem Server 28. Anhand der gewählten Telefonnummer kann der Server 28 den Sprachbefehl 30 einem Benutzerkonto zuordnen.

Der von dem Mobilfunkgerät 26 eingehende Sprachbefehl 30 wird daraufhin zunächst mittels des Verwalters 40 verarbeitet. Der Verwalter 40 hat dafür Zugriff auf zumindest eine Datenbank oder eine sonstige Datenbasis 42. In der Datenbasis 42 sind als Daten des jeweiligen Benutzerkontos Daten zur Identifikation des jeweiligen Benutzers gespeichert. Solche Daten können eine Rufnummer oder eine sonstige Kennung des von dem Benutzer verwendeten Mobilfunkgeräts 26, sprachspezifische Kennwerte und oder eine Sicherheitsabfrage umfassen. Beim Eingang eines Sprachbefehls 30 prüft der Verwalter 40 die Zulässigkeit des Zugriffs auf den Server 28 und das jeweilige Benutzerkonto anhand zumindest eines Kriteriums, also zum Beispiel durch Vergleich der in der Datenbasis 42 gespeicherten Rufnummer und der Rufnummer, unter der der aktuelle Sprachbefehl 30 eingeht.

Eine mit einem Sprachbefehl 30 jeweils ausgelöste Aktion in Bezug auf eines der Haushaltsgeräte 12-18 kann dabei unterschiedlichen Sicherheitsstufen zugeordnet sein. Wenn ein Benutzerkonto mehrere Daten zur Identifikation des jeweiligen Benutzers umfasst, ist jedes derartige Datum ebenfalls mit zumindest einer Sicherheitsstufe verknüpft, so dass je nach der Art und Weise, wie sich der Benutzer identifiziert und oder je nach Art des Sprachbefehls 30 unterschiedliche Sicherheitsstufen freigeschaltet werden.

Bei einer Identifikation des Benutzers anhand von in der Datenbasis 42 gespeicherten sprachspezifischen Kennwerten werden diese mit anhand des jeweils eingegangenen Sprachbefehls 30 gewonnenen sprachspezifischen Kennwerten verglichen. Auf diese Weise wird sichergestellt, dass der Zugriff auf das Benutzerkonto und die mit den sprachspezifischen Kennwerten assoziierte Sicherheitsstufe nur durch die jeweils berechtigte Person erfolgt. Ist dieser Vergleich erfolgreich abgeschlossen, dahingehend, dass der Vergleich der sprachspezifischen Kennwerte anzeigt, dass der eingegangene Sprachbefehl 30 von einer berechtigten Person stammt, kann die weitere Funktionalität des Servers 28 in der jeweiligen Sicherheitsstufe genutzt werden.

Im einfachsten Fall wird nur die Rufnummer des vom Benutzer verwendeten Mobilfunkgeräts 26 mit der in der Datenbasis 42 gespeicherten Rufnummer verglichen und bei einem positiven Vergleichsergebnis kann auch hier die weitere Funktionalität des Servers 28 in der entsprechenden Sicherheitsstufe genutzt werden. Ein anderes Verfahren zur Authentifizierung ist eine akustische Auswertung des Benutzers, bei dem der Anrufer, also der Benutzer temporär gültige Codes oder Ziffern vorlesen muss, um den Speicher und den PIN gleichzeitig und sicher zu identifizieren.

Wenn die Authentifizierung des Benutzers oder des verwendeten Mobilfunkgeräts 26 abgeschlossen ist, erfolgt die inhaltliche Auswertung des Sprachbefehls 30 mittels des Spracherkenners 36. Der Spracherkenner 36 analysiert den Sprachbefehl 30 und extrahiert - zum Beispiel anhand einer Menge bekannter und in der Datenbasis 42 hinterlegter Worte und Regeln - zunächst die von dem Sprachbefehl 30 umfassten Worte oder einzelne charakteristische Worte. Anhand der so ermittelten Worte unternimmt der Spracherkenner 36 automatisch eine semantische Analyse des Sprachbefehls 30 und nimmt eine Zuordnung der Worte zu einzelnen oder mehreren Haushaltsgeräten 12-18 und/oder deren Funktion vor. Je nachdem, in welchem Umfang eine solche Zuordnung erfolgreich war, kann der Spracherkenner 36 Rückfragen stellen, die dem Benutzer des Mobilfunkgeräts 26 in Form von Textnachrichten oder gesprochener Sprache auf sein Mobilfunkgerät 26 übermittelt werden. Wenn der Benutzer eine solche Rückfrage beantwortet, geht daraufhin ein weiterer Sprachbefehl 30 beim Server 28 ein, der ebenfalls vom Spracherkenner 36 ausgewertet und im Hinblick auf eine Konkretisierung der Zuordnung der zuvor ermittelten Worte zu einzelnen Haushaltsgeräten 12-18 oder deren Funktion analysiert wird. Solche Rückfragen können auch darin bestehen, dass dem Benutzer des Mobilfunkgeräts 26 - insbesondere in Form von gesprochener Sprache - unterschiedliche Optionen angeboten werden, von denen der Benutzer - insbesondere durch einen weiteren Sprachbefehl 30 - eine oder mehrere auswählen kann.

Die Funktionalität des Spracherkenners 36 ist komplex und daher ist gemäß dem hier vorgeschlagenen Ansatz vorgesehen, dass die Funktionalität des Spracherkenners 36 für eine Vielzahl von Haushalten in Form des Servers 28 verfügbar gemacht wird, denn eine Implementierung einer solchen Funktionalität auf einem lokalen Computer des jeweiligen Haushalts 10 erscheint derzeit und auch auf absehbare Zeit unrealistisch. Die Realisierung eines Spracherkenners 36 der hier vorausgesetzten Art ist nicht Gegenstand der Anmeldung, so dass insoweit auf den bekannten Stand der Technik verwiesen wird. Im Stand der Technik ist zum Beispiel das von der International Business Machines Corporation entwickelte Computerprogramm mit dem Namen "Watson" bekannt (http://en.wikipedia.org/wiki/ Watson_%28computer%29), das gesprochene Sprache sehr weitgehend analysieren und semantische Zuordnungen vornehmen kann. Ebenfalls im Stand der Technik bekannt sind sogenannte semantische Suchmaschinen, die mittels eines Mobilfunkgeräts an einen Server gegebene sprachliche Anfragen sinnvoll interpretieren und passende Antworten finden können.

Nachdem der Spracherkenner 36 auf diese Weise einen Sprachbefehl 30 oder eine Folge von Sprachbefehlen 30 intern in eine sich auf ein Haushaltsgerät 12-18 beziehende und elektronisch codierte Anweisung 44 umgesetzt hat, wird diese vom Auswerter 38 weiter verarbeitet. Der Auswerter 38 greift ebenfalls auf die Datenbasis 42 oder eine weitere Datenbasis 42 zu und setzt die Anweisung 44 in Steuerbefehle 46 für das jeweilige Haushaltsgerät 12-18 um. Auf diese Weise erfolgt eine spezifische Anpassung einer aufgrund eines Sprachbefehls 30 gewonnenen Anweisung 44, die sich zum Beispiel auf einen Waschautomaten 12 bezieht, in gerätespezifische Steuerbefehle 46.

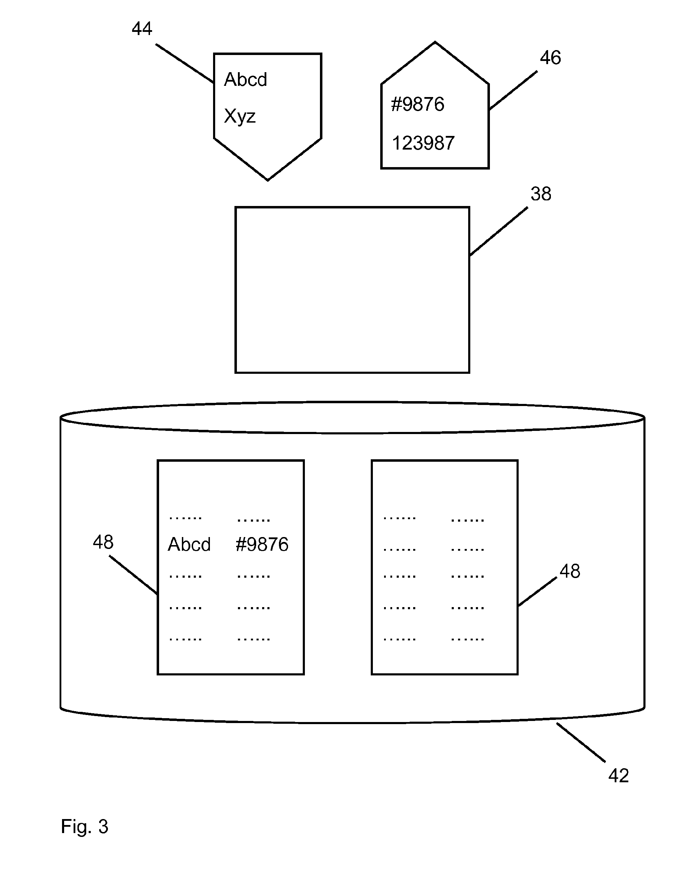

Eine besonders einfache Möglichkeit zur Umsetzung der auf Basis eines eingegangenen Sprachbefehls 30 gewonnenen elektronisch codierten Anweisung 44 in einen oder mehrere gerätespezifische Steuerbefehle 46 besteht in der Verwendung einer sogenannten LookUpTabelle 48 (Figur 3), wobei ein Zugriff auf eine solche Tabelle 48 mittels einer codierten Anweisung 44 oder eines Teils einer solchen codierten Anweisung 44 erfolgt und sich der jeweils gerätespezifische Steuerbefehl 46 anhand des zu einer solchen codierten Anweisung 44 in der Tabelle 48 passenden Eintrags ergibt.

Die Darstellung in Figur 3 illustriert in schematisch stark vereinfachter Form eine solche mögliche Ausführungsform zur Umsetzung einer auf einem Sprachbefehl 30 basierenden elektronisch codierten Anweisung 44 in einen gerätespezifischen Steuerbefehl 46. Danach umfasst die beispielhafte Anweisung 44 ein erstes und ein zweites Datum - symbolisch als "Abcd" und "Xyz" gezeigt. Das Datum "Abcd" geht zum Beispiel auf das in dem Sprachbefehl 30 enthaltene gesprochene Wort "Waschmaschine" zurück und das Datum "Xyz" geht zum Beispiel auf das in dem Sprachbefehl 30 enthaltene gesprochene Wort "Ausschalten" zurück. Mit den von der Anweisung 44 umfassten Daten ist ein Zugriff auf eine oder mehrere LookUpTabellen 48 oder dergleichen in der Datenbasis 42 möglich. Eine den Waschautomaten 12 durch das gesprochene Wort "Waschmaschine" bezeichnende Referenz - hier symbolisch als "#9876" gezeigt - ist im dargestellten Beispiel das Ergebnis des Zugriffs auf eine solche Tabelle 48 mit dem Datum "Abcd". Genauso - nicht dargestellt - oder auf ähnliche Art und Weise wird jedes von der Anweisung 44 umfasste Datum in Elemente des resultierenden Steuerbefehls 46 umgesetzt. Eine Referenz wie "#9876" wird beim Empfang des Steuerbefehls 46 im jeweiligen Haushaltshaushalt 10 mittels der dortigen lokalen Einheit 20 verwendet, um den Steuerbefehls 46 an das jeweilige Haushaltsgerät, hier also den Waschautomaten 12, weiterzuleiten.

Nicht gezeigt ist, dass die Datenbasis 42 oder eine verteilte Form einer solchen Datenbasis 42 die beispielhaft gezeigten LookUp-Tabellen 48 zum Beispiel als Bestandteil eines jeden zur Nutzung einer Dienstleistung gemäß dem hier beschriebenen Ansatz angelegten Benutzerkontos umfassen kann oder dass solche Tabellen 48 in der Datenbasis 42 zur Verwendung durch mehrere Benutzerkonten zur Verfügung stehen, indem jedes Benutzerkonto eine Referenz auf eine solche Tabelle 48 außerhalb des Benutzerkontos umfasst, wobei sich die referenzierte Tabelle auf das im jeweiligen Haushalt 10 vorhandene Haushaltsgerät 12-18 bezieht.

Jedenfalls kann der Server 28 mit seinem Computerprogramm 34 unterschiedliche Haushaltsgeräte 12-18, auch Haushaltsgeräte 12-18 unterschiedlicher Typen und/oder unterschiedlicher Hersteller, korrekt ansprechen, indem eine auf Basis eines eingegangenen Sprachbefehls 30 gewonnene elektronisch codierte Anweisung 44, die sich zum Beispiel auf das Ausschalten des jeweiligen Haushaltsgerät 12-18 bezieht, in einen gerätespezifischen Steuerbefehl 46 zum Deaktivieren des Haushaltsgeräts 12-18 umgewandelt wird.

Dafür umfassen die in der Datenbasis 42 in dem jeweiligen Benutzerkonto vorgehaltenen Daten zum Beispiel in Form der beispielhaft erwähnten LookUp-Tabellen 48 Informationen zu den Haushaltsgeräten 12-18 im Haushalt 10 des jeweiligen Benutzers und für jedes Haushaltsgerät 12-18 Daten zu den mit dem jeweiligen Haushaltsgerät 12-18 ausführbaren Funktionen, zumindest Daten zu denjenigen Funktionen, die zur Verwendung mittels eines Sprachbefehls 30 zugelassen sind. Der Benutzer kann durch Aufnahme solcher Daten in sein Benutzerkonto also einzelne Haushaltsgeräte 12-18 für eine Bedienung mittels Sprachbefehl 30 freigeben, während andere Haushaltsgeräte 12-18 für eine solche Bedienung nicht freigegeben sind, indem das Benutzerkonto keine Daten für das jeweilige Haushaltsgerät 12-18 oder keine Daten für mittels des jeweiligen Haushaltsgeräts 12-18 ausführbare Funktionen umfasst.

Der über das externe Netzwerk 24 mit dem Haushalt 10 verbundene Server 28 kann den so generierten Steuerbefehl 46 abschließend über das externe Netzwerk 24 an den Haushalt 10 senden. Dort wird der Steuerbefehl 46 mittels der Schnittstelleneinheit 22 sowie der lokalen Einheit 20 empfangen und an das jeweilige Haushaltsgerät 12-18 weitergeleitet. Die Übermittlung des Steuerbefehls 46 über das externe Netzwerk 24 erfolgt dabei zum Beispiel mittels geschützter Protokolle.

Mit dem hier beschriebenen Ansatz ist es erstmals möglich, eine für ein Haus oder eine Wohnung (Haushalt 10) vergebene Rufnummer zum Beispiel vom Auto aus anzurufen und Einstellungen oder Veränderungen von Einstellungen in Bezug auf Haushaltsgeräte 12-18 des Haushalts 10 kontextbezogen per Sprache vorzunehmen. So können zum Beispiel die Bedingungen, wann automatische Rollläden oder eine Heizung reagieren sollen, durch wenige Spracheingaben eingestellt werden (Beispiel: Wenn heute Nacht die Temperatur unter 0° sinken sollte, dann Rollläden schließen und die Heizung auf 18° im Schlafzimmer einstellen). Auch lassen sich zum Beispiel der Zeitpunkt eines von einem Waschautomaten 12 ausgeführten Waschprogramms mit der Rückkehr nach Hause verknüpfen. So entsteht zum Beispiel die Möglichkeit, dass ein Anruf bei dem Server 28 wie "Ich stehe im Stau und bin erst gegen acht zuhause" eine Verschiebung der Endzeit beim Waschautomaten 12 auslöst und gleichzeitig nach weiteren, gegebenenfalls aufzuschiebenden Aktionen gesucht wird. Ein Beispiel für eine solche gegebenenfalls aufzuschiebende Aktion ist das Hochfahren der Heizung zu einem späteren als dem ursprünglich eingestellten Zeitpunkt, wenn sich sonst niemand in dem Haushalt 10 aufhält.

### Bezugszeichenliste

- 10: Haushalt
- 12: Haushaltsgerät / Waschautomat
- 14: Haushaltsgerät / Geschirrspüler
- 16: Haushaltsgerät / Backofen
- 18: Haushaltsgerät / Kochfeld
- 20: lokale Einheit
- 22: Schnittstelleneinheit
- 24: externes Netzwerk / Internet
- 26: Mobilfunkgerät
- 28: Server
- 30: Sprachbefehl
- 32: Speicher (des Servers)
- 34: Computerprogramm (im Speicher des Servers)
- 36: Spracherkennungsfunktionalität / Spracherkenner
- 38: Auswertungsfunktionalität / Auswerter
- 40: Verwaltungsfunktionalität / Verwalter
- 42: Datenbasis
- 44: elektronisch codierte Anweisung (auf Basis des Sprachbefehls)
- 46: Steuerbefehl (auf Basis der elektronisch codierten Anweisung)
- 48: LookUp-Tabelle

## Patentansprüche

1. Verfahren zum Bedienen von Haushaltsgeräten (12-18) eines Haushalts (10) mittels Sprachsteuerung,
wobei ein zur Sprachsteuerung eines Haushaltsgeräts (12-18) bestimmter Sprachbefehl (30) an einen für mehrere Haushalte (10) erreichbaren Server (28) übermittelt wird, wobei der Server (28) einen Spracherkenner (36) und einen Auswerter (38) und einen Verwalter (40) umfasst,
wobei mittels des Verwalters (40) der eingehende Sprachbefehl (30) automatisch einem Benutzerkonto und einem in dem Benutzerkonto spezifizierten Haushalt (10) zugeordnet wird,
wobei mittels des Spracherkenners (36) der beim Server (28) eingehende Sprachbefehl (30) automatisch in eine elektronisch codierte Anweisung (44) und die elektronisch codierte Anweisung (44) mittels des Auswerters (38) automatisch in einen Steuerbefehl (46) für entsprechend dem Benutzerkonto in dem jeweiligen Haushalt (10) vorhandene Haushaltsgeräte (12-18) umgesetzt wird und
wobei der Steuerbefehl (46) mittels des Servers (28) an den in dem Benutzerkonto spezifizierten Haushalt (10) gesandt wird.

2. Verfahren nach Anspruch 1, wobei der zur Sprachsteuerung eines Haushaltsgeräts (12-18) bestimmte Sprachbefehl (30) mittels eines Mobilfunkgeräts (26) an den Server (28) übermittelt wird.

3. Verfahren nach Anspruch 1 oder 2, wobei der Server (28) den Steuerbefehl (46) mittels des Internets (24) an den in dem Benutzerkonto spezifizierten Haushalt (10) sendet.

4. Verfahren nach einem der vorangehenden Ansprüche, wobei der Server (28) Zugriff auf eine Datenbasis (42) mit dort angelegten Daten zur Spezifikation einer Vielzahl von Benutzerkonten hat.

5. Verfahren nach Anspruch 4, wobei der Verwalter (40) mit dem eingehenden Sprachbefehl (30) automatisch ein Benutzerkonto auswählt.

6. Verfahren nach Anspruch 5, wobei der Verwalter (40) anhand einer jeweiligen Identifikation eines den Sprachbefehl (30) übermittelnden Benutzers automatisch einen hierarchisch gestaffelten Zugriff auf einzelne Haushaltsgeräte (12-18) des Haushalts (10) freigibt.

7. System zum Bedienen von Haushaltsgeräten (12-18) eines Haushalts (10) mittels Sprachsteuerung,
wobei das System einen Server (28) und in zumindest einem Haushalt (10) eine für den Server (28) über ein externes Netzwerk (24) erreichbare lokale Einheit (20) umfasst, wobei mit der lokalen Einheit (20) die in dem jeweiligen Haushalt (10) zur Bedienung mittels Sprachsteuerung bestimmten Haushaltsgeräte (12-18) kommunikativ verbunden sind, und
wobei der Server (28) Mittel (34, 36, 38, 40) zur Ausführung eines Verfahrens nach einem der vorangehenden Ansprüche umfasst.
